# EUROPEAN PATENT APPLICATION

(11) **EP 3 524 739 A1**
(43) Date of publication of application: **14.08.2019**
(21) Application number: 18156344.6
(22) Date of filing: 12.02.2018
(51) Int. Cl.: E03B 7/12, F24D 19/00, G05D 23/19, F16L 57/02, F16L 7/02, F17D 5/00

(54) **A HEATING SYSTEM FOR PREVENTING FREEZING OF A FLUID IN A CONDUIT**

(71) Applicant: Dunn, Paul, D18 KV02 Dublin (IE)
(72) Inventor: Dunn, Paul, D18 KV02 Dublin (IE)
(74) Representative: MacLachlan & Donaldson

(57) **Abstract**

A heating system (100) for maintaining a fluid in a conduit (4) around a target temperature. The heating system (100) comprises at least one conduit heating unit (1) which is operated by a temperature control unit (2). The conduit heating unit (1) comprises a sleeve member (1 a) and a heating unit (1b) which is arranged for being in contact with an outer wall (4a) of the conduit (4). The conduit heating unit (1) comprises at least one resistive heating element (10) having a fixed electrical resistance, and a first electrical connector (6) arranged for supplying to the at least one resistive heating element (10) a supply voltage signal having predetermined electrical characteristics. The supply voltage signal is generated by a voltage regulating unit (13) based on instructions received from a processing unit (12). The processing unit (12) is arranged for activating the voltage regulating unit (13) when the conduit temperature such that the temperature of the fluid in the conduit (4) is maintained around the target temperature.

## Description

The present invention relates to a heating system for heating a fluid in a conduit to a target temperature, so as to avoid the freezing of the fluid at low temperatures that can potentially lead to the bursting of the conduit. The heating system of the present invention is configured when activated to maintain the temperature of the fluid in the pipe at a temperature above its freezing point. The heating system of the present invention being configured to communicate via a communication network with a user device, thereby allowing the exchange of information with the user device and further allowing the user to operate the heating system as needed remotely.

### Background to the Invention

During the winter months, ambient temperature can vary between wide limits. For example, it is not unusual for temperatures to unexpectedly below a fluid freezing point without any previous warning. With climate change, winter months are expected to be even more unpredictable, and such fluctuations in the temperatures would become commonplace. One consequence of the temperatures dropping below a fluid freezing point is that the pipes carrying water or another fluid may become subject to bursting. The pipe bursting phenomenon is caused due to the built up of pressure accumulated between the closed faucet and the blockage formed by the frozen fluid in the pipe. The bursting problem is observed in both in internal and external pipes and may cause significant damage to the property if it is not timely treated. For example, the bursting of water pipes placed in the attic may cause the collapse of the ceiling of the property, and cause the flooding of the property. This problem is accentuated when the property is vacant during the period in which freezing temperatures are observed. For example, in the case that the owner of the property is on holidays during a cold weather spell, they would not be able to respond in a timely manner to prevent the bursting of the water pipes. In many cases, property owners have returned from their holidays to find their property significantly damaged. This situation is distressing not only for the owners but for the home insurance companies that have to pay the home insurance claims. Many insurance companies are now refusing to insure this risk for home owners or will have exceptional loadings to a policy to cover such an incident.

Several solutions are currently available for preventing the water in the pipe from freezing. For example, it is known to use a heat tape or a heating cable that can be wrapped around the pipes to prevent the water in the pipes from freezing. The known prior art solutions are connected directly to the mains supply voltage and are configured to output a fixed heating power. However, one of the major problems with the known solutions is that the heating power generated cannot be adjusted according to the fluctuation of the ambient temperature. Therefore, these known products are not considered to be energy efficient. Primarily, these known products are configured to heat the entire cable rather than the area affected, which significantly increases energy consumed. Furthermore, there are strict guidelines for the use of these products with other insulating materials for fear of overheating, which may cause damage to the pipe but also may significantly increase the risk of fire. Moreover, the known products cannot be operated remotely by the user and require to be manually activated. For example, the known products need to be manually plugged-in by the user. As a result, in the case where the owner is absent during an unexpected cold weather spell, he/she would not be able to prevent the freezing of the water in the pipes, which may lead to the bursting of the pipes.

Therefore, there is a need of developing an improved heating system that overcomes the problems of the known solutions.

### Summary of the invention

It is an object of the present invention to provide an improved heating system that overcomes the disadvantages of the prior art. For example, it is an object of the present invention to provide a heating system that is easy to install and more energy efficient than the known solution

It is a further object of the present invention to provide a heating system that can be monitored and operated remotely by the user.

The object of the present invention is achieved by the heating system having the characteristics of the first claim.

More specifically, according to a first aspect of the present invention, a heating system for maintaining a fluid in a conduit around a target temperature is provided. The heating system is provided with at least one conduit heating unit that comprises a sleeve member arranged to be releasably secured around an outer wall of a section of the conduit, and a heating unit. The heating unit is provided with at least one resistive heating element having a fixed electrical resistance, and a first electrical connector connected to the at least one resistive element and arranged for supplying to the at least one resistive heating element a supply voltage signal having predetermined electrical characteristics. The heating unit is releasably attached at an inner surface of the sleeve member such that, when the sleeve member is secured to the section of the conduit, the heating unit is in contact with a first portion of the an outer wall of the conduit so that when the supply voltage signal is applied to the heating element, the heat generated is transferred via the first portion of the outer conduit wall to the fluid in the conduit. The heating system comprises at least a first sensor arranged for at least measuring the conduit temperature, the first sensor being in contact with a second portion of the outer wall of the conduit and temperature control unit. The temperature control unit is arranged, when activated, for operating the at least one conduit heating unit. The temperature control unit comprises a processing unit, which is operatively coupled to the at least one first sensor and arranged for continuously monitoring the conduit temperature detected. The processing unit is programmed when the conduit temperature drops below a threshold level to operate a voltage regulating unit. The voltage regulating unit is arranged, based on instructions received from the processor, for generating from a voltage source the supply voltage signal to be applied to the at least one resistive heating element of the heating unit for heating the fluid in the conduit to the target temperature.

It has been found that by providing at least a first sensor for measuring the conduit temperature and temperature control unit according to the present invention, the heating generated by the conduit heating unit can be easily adapted according to the conduit temperature detected. As a result, the energy consumed by the heating system of the present invention may be continuously adapted according to the conduit temperature detected by the first sensor, which in contrast with the known solutions where the heating system is either on or off. For example, with the system of the present invention, it is possible to adjust to heating power generated by the heating unit so as to account faster temperature drops. In this way, it is ensured that the fluid in the conduit, e.g. water pipe, is maintained around the target temperature irrespective of the rate at which the conduit temperature drops. It has been further found that by measuring the temperature of the conduit offer a more precise view of the state of the fluid in the conduit compared to use of ambient temperature information alone. The system of the present invention may also employ a second sensor that is capable of measuring the ambient temperature of the space in which the conduit is positioned. The temperatures detected from the first and second sensors may be used by the processing unit to decide the rate at which the heating power of the heating unit needs to be adjusted, to prevent freezing of the fluid in the conduit. It should be noted that other sensors may be employed to measure different characteristics, such as humidity. The sensors may be connected to the temperature control unit via a wired or wireless connection, such that information collected is transferred to the processing unit for processing. It has been found that the system of the present invention, may optimally regulate the operation of the conduit heating unit according to the information received from the at least first sensor. As a result, the overall energy consumption may be significantly lower compared to the known solutions. The system of the present invention is the form of a self-regulating heating system that may be configured to be automatically activated when the temperature drops below a certain threshold. As a result, the system can be activated automatically even in the absence of property owner. The heating system of the present invention may also be configured such that the maximum heat generated by the heating unit is below a certain maximum temperature threshold. As a result, even when the heating system is required to operate for a lengthy period of time, the danger of overheating is minimised. The system of the present invention may further be provided with a safety switch, e.g. in the form of a fuse or related devices, which is arranged when an unexpected surge in electrical current is detected to suspend the operation of the heating system. The temperature control unit may be connected to a power supply, e.g. the mains power supply, which power supply may be used to derive the supply voltage signal that is applied to the at least one resistive heating element of the each of the heating conduit units used and further power the temperature control unit. The target temperature may be set by the user to be above the freezing point of the fluid in the conduit. For example, in the case of fluid in the conduit being water, the target temperature may be set to be in the region of 3 degrees Celsius. The threshold temperature may also be set by the user and may be equal or below to the target temperature.

According to embodiments of the present invention, the processing unit is arranged, based on at least the conduit temperature detected, for adjusting the duty cycle of the voltage regulating unit and/or at least one electrical characteristic of the supply voltage signal so as to adapt the heat generated by the at least one resistive heating element.

It has been found that by adjusting the heating power based on at least the conduit temperature detected, the energy consumed by the heating system of the present invention may be optimised. In this way, overall energy consumption may be adapted according to the information received by at least the first sensor, which is contrary to the operation of the known solutions that are in either on or off state. The processing unit may adjust the heating power by controlling the operation of the voltage regulating unit, which is responsible for generating the supply voltage signal that is transferred to the heating unit. For example, the processing unit, based on the information received by the first sensor, using a set of instructions may be configured for adapting the duty cycle of the voltage regulating unit e.g. by switching on/off the voltage regulating unit at predetermined intervals, and/or by adjusting the electrical characteristics of the supply voltage signal such as amplitude, signal frequency or current. The instructions issued by the processing unit to the voltage regulating unit may be generated using a computer program loaded into the memory of the processing unit. The processing unit may at least comprise a processor, a memory, and a data communication interface allowing the device to communicate with other modules. The instructions may be pre-loaded into the memory of the processor in the form of a Look-up-Table (LUT) or another acceptable format. In the case of a LUT, the instructions may define for each temperature point how the voltage regulating unit needs be operated to produce the desired supply voltage signal. The computer program and/or the instructions may be fully programmable. An access point may be provided in the temperature control unit that allows the interaction of a user with the processing unit, e.g. for the loading, modification of programmable instructions and/or the computer program, etc. The access point may be in the form of a physical port, e.g. a USB port or a wired or wireless connection, e.g. via a communication network. The programmable instructions and/or computer program may be adapted depending on the material of the conduit, e.g. PVC, metal, etc. In this way, it is ensured that the heat generated by the conduit heating unit is optimised according to the material of the conduit.

According to embodiments of the present invention, the supply voltage signal may be in the form of a periodic signal arranged to activate and deactivate the at least one resistive heating element at predetermined intervals.

It has been found that by providing the supply voltage signal in the form of a periodic signal has the advantage that the conduit heating unit can be activated and deactivated in a simple manner that follows the set of instruction received from the processing unit. In this way, the voltage regulating unit can be simply operated, by means for example of a timer, to generate the desired supply voltage signal. For example, a processing unit controlled timer may be used to switch on and off the voltage regulating unit at a predetermined interval, corresponding to the set of instruction received by the processing unit, so that a supply voltage signal of predetermined frequency is generated. The period of the supply voltage signal may be used to control the interval at which the at least one resistive element is activated and deactivated.

According to embodiments of the present invention, the processor is arranged for at least adjusting the period of the supply voltage signal based on a selected set of instructions loaded in a memory of the processor. The processor may also be arranged for adjusting the amplitude of the supply voltage signal, or another electrical characteristic, based on a selected set of instructions loaded in a memory of the processor. It has been found that by adjusting the electrical characteristics of the supply voltage signal, e.g. frequency, amplitude, etc. the heat generated by the at least one resistive heating element can be optimally controlled so that the fluid in the conduit is maintained at around a target temperature despite the fluctuation in the ambient temperature. By controlling the operation of the resistive heating element, the energy consumed can also be controlled, since higher energy may be consumed at very low temperatures, e.g. at -26 degrees Celsius, while a lower energy will be consumed at temperatures that are close but below the conduit temperature threshold level, e.g. when the conduit temperature is +1 degrees Celsius while the threshold temperature level is + 3 degrees Celsius. For example, based on the set of instructions received by the processor, the voltage regulating unit may adjust the amplitude of the supply voltage signal, e.g. using resistors or any other means.

According to embodiments of the present invention, the temperature control unit is arranged for exchanging data, via a communication network, with a user device, which enables the user to monitor and/ remotely or control the operation of the heating system according to the data received, for example, the temperature control unit may communicate via a communication network with a notification server that is arranged to send a notification to a user. The notifications may be in the form of an SMS message, an alert, etc. For example, the notification server may be configured for pushing notifications on a mobile application installed on a user device user, e.g. a mobile phone, tablet, PC, laptop etc.. Furthermore, the mobile application based on the data received from the temperature control unit, may provide the user with a set of recommendations e.g. operate the heating device, the energy consumption level, the conduit and/or ambient temperature detected, or any other type of information. The user may remotely operate the temperature control unit via the communication network. For example, the user may use the application to operate or modify the operation of the heating system. Although a mobile application has been provided as an example of how communication between the temperatures control unit and the user can be established, this may also be achieved by other means, e.g. via a text message, email, etc. The temperature control unit may further communicate with a cloud server for storing and retrieving system information, which may then be accessible by the user via the mobile application or another program.

According to embodiments of the present invention, the temperature control unit is arranged, when the conduit temperature detected by the first sensor is raised above a second threshold level, for issuing an alert signal to the user device, the second threshold level being higher than the first threshold level.

It has been found that by monitoring whether the temperature of the conduit has reached a high-temperature level, has the advantage that any overheating caused by a malfunction of the system or by another factor can be quickly resolved. For example, in the case of a system malfunction, which may cause the overheating of the conduit above a certain level, e.g. +40 degrees Celsius, the temperature control unit may issue an alarm to the user and/or automatically deactivate the system. The user may analyse the results to determine the cause of the overheating and accordingly send someone to check the issue. The temperature control unit may also be programmed to automatically notify a designated authority, e.g. fire department, or another user. In this way, the risk of fire caused by overheating of the system may be prevented.

According to embodiments of the present invention, the sleeve member is in the form of a tube having a longitudinal opening running the entire length of the sleeve member. The dimensions of the opening are adjustable so as to allow the sleeve member to fit around the conduit. For example, the sleeve member may be made from a resilient material, which is arranged, when a force is applied, for adjusting the dimensions of the opening of the sleeve member, the sleeve member being biased towards the original tube shape. It has been found that by providing the sleeve member with an opening, the conduit heating unit can be placed quickly around the conduit. Furthermore, by providing a sleeve member made from a resilient material the sleeve member can be easily secured in a releasable and tight manner around the conduit without the need of additional elements. As a result, with the heating system of the present invention it is easy to retrofit existing conduit system, e.g. water pipe systems. If required, additional securing elements may be provided, e.g. pins, tape, clamps.

According to embodiments of the present invention, the sleeve member may be made from an insulating material. By constructing the heating element from an insulating material has the advantage of minimising heat loss. As a result, the majority of the heat generated is used to heat the outer conduit wall and by extension the fluid. In this way, the energy efficiency of the heating system of the present invention is significantly increased.

According to embodiments of the present invention, at least part of the resistive heating element is embedded in a membrane sheet. The membrane sheet is releasably attached to the inner surface of the sleeve member (1a) by means of an adhesive. The membrane sheet is arranged for at least encapsulating a part of the at least one resistive heating element. The membrane sheet may be made from a high-temperature plastic material, e.g. Polyvinyl chloride (PVC) material, or another suitable material. It has been found that by encapsulating the resistive heating element in a membrane, may prevent moisture coming into contact with the resistive heating elements. The use of PVC or another plastic material ensures that the heating unit remains flexible to allow for the sleeve member to be placed around the conduit. The use of a membrane may also increase the ruggedness of the heating system and prevent exposure or damage to the at least one resistive heating element. According to embodiments of the present invention, the at least one heating element may be embedded directly in the sleeve member,

According to embodiments of the present invention, at least part of the first sensor is embedded in a membrane sheet, wherein the first sensor is connected to the first electrical connector. According to embodiments of the present invention, the first sensor may be embedded together with the at least one resistive heating element in the same membrane sheet. According to embodiments of the present invention, at least part of the first sensor remains exposed, e.g. the sensing element, so that it comes in direct contact with the outer wall of the conduit. The sensing element, which measures the conduit temperature, may be connected to the first connector with a wired interface, e.g. electrical wires. The first sensor may also be a wireless sensor, which may communicate directly with the temperature control unit. The first sensor may be positioned at a first distance from the at least one restive heating element, so as to reduce the effect of the direct heat generated by the at least one resistive element to the sensor measurement.

According to embodiments, the heating unit may be attached to an inner surface area of the sleeve member along its entire length. The heating unit may be attached to the inner surface of the sleeve member by any known means, e.g. adhesive. The heating unit may be provided with a plurality of heating elements, each arranged for receiving the supply voltage signal generated by the voltage regulating unit. For example, the resistive heating elements may be in a serpentine form that is disposed along the entire length of the membrane sheet.

According to embodiments of the present invention, the at least one resistive heating wire is made from a metal-based material, e.g. tungsten. The at least one resistive heating element may be made from a metal-based material that offers high strength and good electrical resistivity. As a result, the resistive heating element can reach the desired temperature quickly, while significantly increasing the ruggedness of the heating system. It should be noted the use of tungsten for forming the resistive heating element is provided only as an example, and that other metals may be used instead.

According to embodiments of the present invention, the temperature control unit is connected via a voltage supply switching mechanism to a backup voltage source, the voltage supply switching mechanism being configured, when a voltage interruption is detected in the primary voltage source, for switching to the backup voltage source so as to ensure continuation of service.

It has been found that by providing a voltage supply switching mechanism, the heating system can continue to operate even when there is an interruption of service in the primary voltage source, e.g. electricity power-cut. The voltage supply switching mechanism may be implemented using diodes, e.g. in a diode-OR configuration. The voltage supply switching mechanism may also be in the form of more sophisticated circuit solutions that contain Integrated circuits, which are configured to switch between power sources efficiently without switching noise.

According to embodiments of the present invention, the heating unit may be provided with a second electrical connector, which is electrically connected to the first electrical connector, the second electrical connector being arranged for connecting to the first electrical connector of a second conduit heating unit that is releasably secured on the conduit such that multiple conduit heating units can be controlled by a single temperature control unit. It has been found that by providing a second electrical connector that can be coupled to the first connector of a second conduit heating unit has the advantage of forming in a quick and easy manner a modular heating system that can cover a larger area of the conduit. Furthermore, the temperature control unit may be configured to control the operation of each of the conduit heating units of the modular heating system. For example, the temperature control unit may be configured for operating each of the heating conduit units according to the conduit temperature detected by the sensor associated with each conduit heating unit. For example, in the case where the conduit and/or ambient temperature associated with a section of the conduit drops below the threshold level, the temperature control unit may select to operate only the conduit heating unit attached to the conduit section affected. Moreover, the temperature control unit may also select to operate independently multiple conduit heating sections. Let's take, for example, a module heating system comprising four conduit heating units. In this case, when the conduit temperature detected by the sensor associated with each connected conduit heating unit drops below the threshold level, the temperature control unit may select to activate only two of the four conduit heating units, e.g. the first and last conduit heating section, rather than all of them. Because the heat generated by one section would be transferred, depending on the conduit material, to conduit sections in close proximity, it may be sufficient to operate only a limited number of sections to heat the fluid in the target temperature. In this way, the overall energy consumption may be further reduced, while ensuring that the fluid in the conduit is maintained at the target temperature.

### Brief Description of the drawings

The following drawings are provided as an example of an inventive Embodiment to explain further and describe various aspects of the invention.
Figure 1 shows an example of a heating system according to embodiments of the present invention.
Figure 2 shows a cross-sectional view of an example of the heating system along section A-A' of figure 1 according to embodiments of the present invention.
Figures 3a and 3b show an example of the components of the conduit heating unit according to embodiments of the present invention.
Figures 4 shows an example the temperature control unit according to embodiments of the present invention.
Figure 5 shows an example of a modular heating system according to embodiments of the present invention.
Figure 6 shows an example of a controller board used to test the heating system of the present invention.
Figure 7 shows an example of the software algorithm loaded into the memory of the microcontroller used in the test environment of Figure 6.
Figure 8 shows an example of the measurements obtained from a test case of the test environment.

### Detailed Description

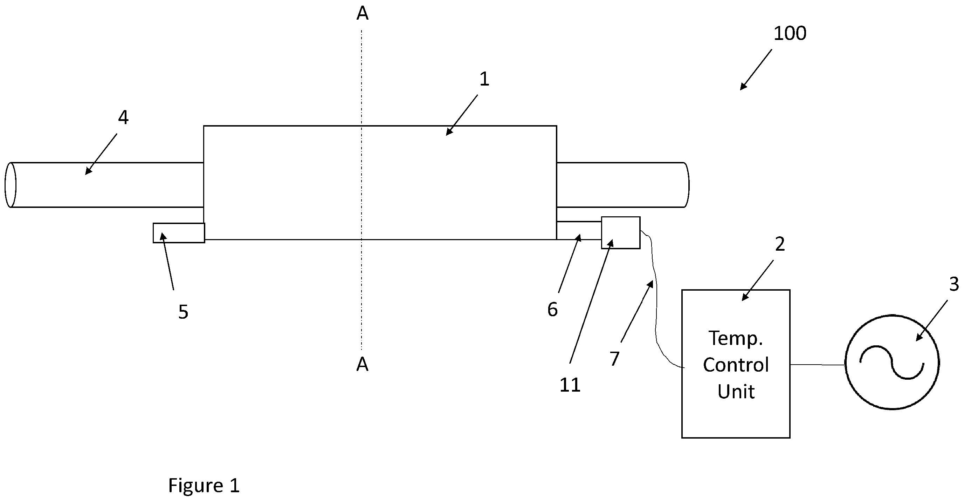

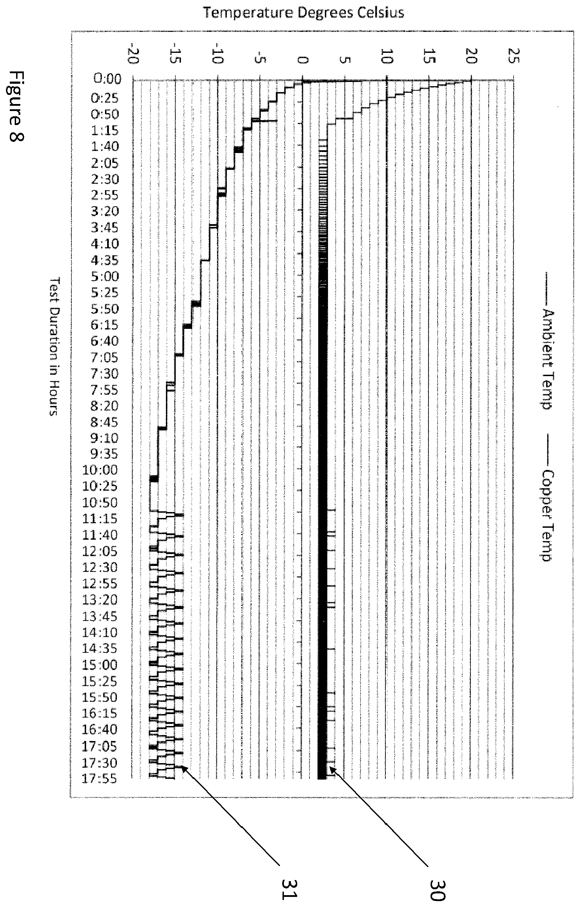

The present invention will be illustrated using the exemplified embodiments shown in the Figures 1 and 8, which will be described in more details below. It should be noted that any references made to dimensions are only indicative and do not restrict the invention in any way. While this invention has been shown and described with reference to certain illustrated embodiments thereof, it will be understood by those skilled in the art that various changes in form and details may be made therein without departing from the scope of the invention encompassed by the appended claims.

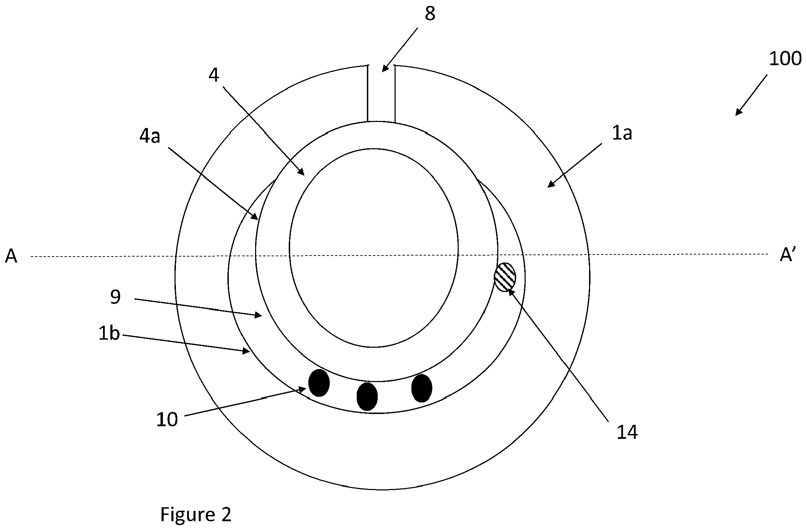

Figures 1 and 2 show an example of a heating system 100 according to embodiments of the present invention. The heating system 100 is provided with a conduit heating unit 1 that is releasably secured to a section of a pipe 4 arranged to carry a fluid, e.g., water. The conduit heating unit 1 comprises a heating unit 1b, which may be provided with at least one resistive element 10, at least partially made from an electrically conductive material, such as metal, e.g. tungsten. The at least one heating element 10 may be provided with fixed electrical resistance and arranged for generating, based on a supply voltage signal having predetermined electrical characteristics, an amount of heat. The heat generated by the at least one electrically resistive element 10 is transferred through the outer wall 4a of the pipe 4 to the fluid. As a result, when the heating unit 1b is activated, the pipe 4 may be heated to a target temperature so as to prevent the fluid in the pipe to freeze due to a temperature drop. At least one temperature sensor 14 may be provided to at least measure the temperature of the pipe 4. The at least one temperature sensor 14 may be in direct contact with the outer wall 4a of the pipe 4. The at least resistive heating element 10 may be at least partially embedded in a membrane sheet 9, which is at least partially made from a plastic material, such as PVC. The at least one temperature sensor 14 may also be partially embedded in the same membrane sheet 9 as the at least one resistive element. In this case, the at least one temperature sensor 14 may be positioned at a predetermined distance from the at least one resistive element 10, to ensure that the conduit temperature measured is not affected significantly from the direct transfer of heat though the membrane material Furthermore, to further minimise the impact of the direct heat transfer, the at least one sensor 14 may be embedded in a separate membrane. Moreover, the processor unit 12 may operate the at least first sensor 14 so that a conduit temperature measurement may be taken after the power to the at least one heating element 10 has being switched off. In this way, a better heat distribution may be achieved and further significantly minimise the impact that the direct heat transfer may have to the conduit temperature measurement. For example, the processor unit 12 may enable the sensor 14 after the power to the at least one heating element 10 has been switched off for a predetermined period e.g. 10 seconds. The temperature sensor 14 may be arranged for measuring the pipe temperature along a section of the pipe so as to increase the sensor sensitivity. Furthermore, multiple sensors may be employed for measuring the pipe temperature at different locations. The at least one heating element and at least one temperature sensor may be electrically connected to a first connector 6. The conduit heating unit 1 may be provided with a sleeve member 1a that is arranged to be releasably secured around a section of the pipe 4. As shown in Figure 2, the membrane sheet 9, comprising the at least one heating element 10 and temperature sensor 14, may be attached to an inner surface of sleeve member 1a. The membrane sheet 9 may be attached to the inner surface of the sleeve member 1a by any means known to the skilled person e.g. adhesive. It should also be noted, that the use of the membrane sheet 9 is entirely optional, and that the at least one resistive element 10 and temperature sensor 14 may be directly embedded in the sleeve member 1a. The sleeve member 1a is provided with an opening 8 that runs along the entire length of the sleeve member 1a. Through the opening 8, the sleeve is fitted around the section of the pipe 4. The sleeve member 1a may be in the form of a tube, which is made from a resilient, and preferably, but not essentially, insulating material, e.g. insulating foam tubes made from a range of material such as rubber, polyurethane, and the like. In this way, the dimensions of the sleeve member opening 8 may be easily reversibly adjusted. The sleeve member 1a is biased towards the original tube form so that when fitted, through the opening 8, around the pipe section 4, it returns back to its original position. As a result, the sleeve member 1a may be secured around the desired pipe section 4 without the need for additional fastening elements, e.g. clamps, pins, tape, and the like. These types of fastening elements may also be provided to secure the sleeve member 1a around the pipe section 4. As shown in Figure 1, a temperature control unit 2 may be provided for controlling the operation of the conduit heating unit 1. The temperature control unit 2 may be connected to the conduit heating unit 1 via the first connector 6. The temperature control unit 2 may be electrically connected to the first connector 6 using an electrical interface, as shown in Figure 1. The electrical interface may be realised by any means known to the skilled person, such as connector 11 connected to the temperature control unit 2 using a cable 7. As previously explained, the temperature control unit 2 is arranged to control the operation of the conduit heating unit 1 so that the heat generated by the at least one resistive heating element 10 maintains the fluid flowing in the pipe 4 at a target temperature, e.g. +3 degrees Celsius. The temperature control unit 2 is arranged depending on the conduit temperature detected by a temperature sensor 14 to generate a supply voltage signal, which is supplied via the first electrical connector 6 to the at least one resistive heating element 10, that is suitable for maintaining the fluid in the conduit 4, e.g. the pipe, at the desired temperature. For example, the temperature control unit 2 may be configured for adjusting the duty cycle of the conduit heating unit 1 and/or adjust the electrical characteristics of the supply voltage signal supplied to the resistive heating element 10. For example, the temperature control unit 2 may be configured for adjusting the amplitude, frequency, duty-cycle, and any other characteristic of the supply voltage signal so that the heat generated by the at least one resistive heating element 10 is adjusted according to the conduit temperature detected.

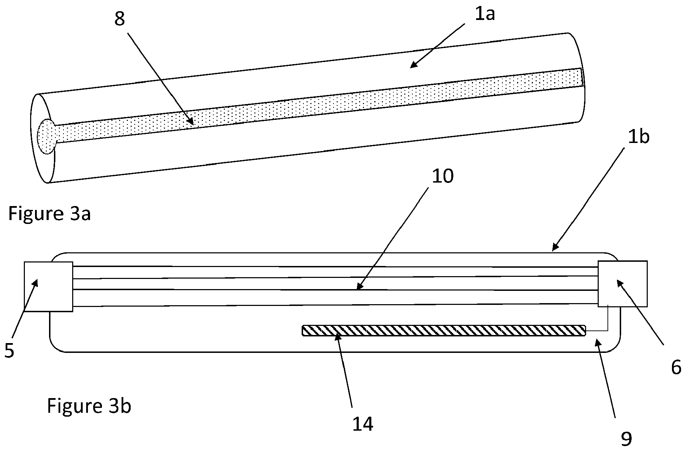

Figures 3a and 3b show an example of the different conduit heating unit 1 components according to embodiments of the present invention. As previously discussed, the conduit heating unit 1 may be provided with a sleeve member 1a, which may be in the form of a tube made from a resilient, and preferably, insulating material. The sleeve member 1a may be provided with an opening 8, running along the entire length of the sleeve member that allows the sleeve member 1a to be positioned around the pipe section 4. As previously described the sleeve member 1a may be made from an insulating foam material such as rubber, polyethylene, and the like. Figure 3b shows an exemplary implementation of a heating unit 1b provided with least one resistive heating element 10 and at least one temperature sensor 14, which are shown to be at least partially embedded in the membrane sheet 9. The at least one resistive heating element 10 and/or the at least sensor 14 may extend along a predetermined portion of the sleeve member 1a, e.g. along the entire length of the sleeve member 1a. The at least one resistive heating element 10 may be in any form suitable for achieving the desired electrical resistance, e.g. serpentine form, and the like, and may be arranged to have a fixed resistance. The temperature sensor 14 may be of any suitable type known to the skilled person suitable for measuring the temperature of the conduit 4. The temperature sensor 14 may be of any type and configuration, e.g. analogue sensor, an infrared sensor, digital sensor, etc. The temperature sensor 14 may be wirelessly connected to the temperature control unit 2. At each end of the membrane sheet 9, a first and a second electrical connector 5 and 6 may be provided, as previously described. The membrane sheet 9 may be attached to the inner surface of the sleeve member 1a using an adhesive or in any other way known to the skilled person. Furthermore, the heating unit 1b may be integrated into the sleeve member 1a material using a suitable manufacturing process. In the case where the heating unit 1b is integrated with the sleeve member 1a, the membrane sheet 9 may not be necessary.

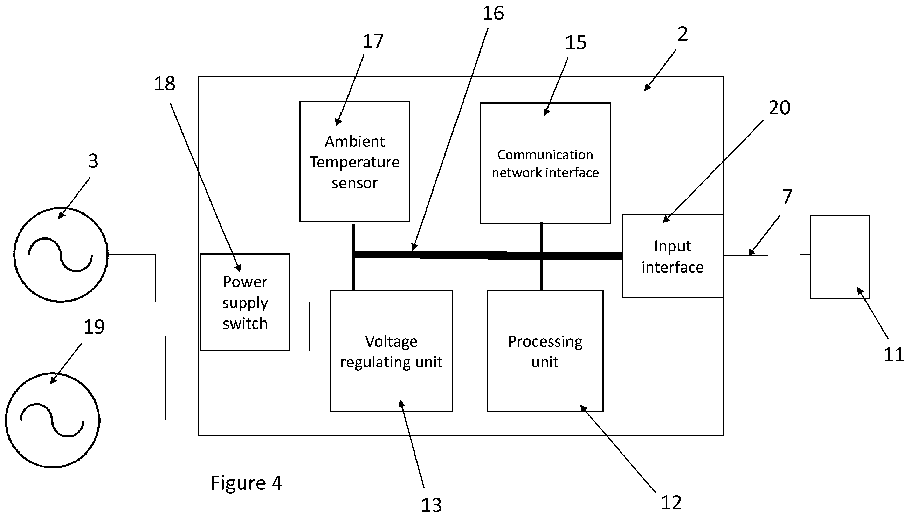

Figure 4 shows an example of the temperature control unit 2 according to embodiments of the present invention. As shown, the temperature control unit 2 may be operatively coupled to a second temperature sensor 17 arranged for monitoring the ambient temperature. The ambient temperature sensor 17 may be part of the temperature control unit 2. The temperature sensor 17 may also be positioned at a distance from the temperature control unit 2. In this case, the ambient temperature sensor 17 may communicate with the temperature control unit 2 via a communication network interface 15, e.g. using a wired or wireless communication link. The communication network interface 15 may be arranged to connect the temperature control unit 2 to a communication network, thereby allowing the exchange of information with a variety of remotely positioned devices, e.g. remotely positioned sensors, mobile user devices, cloud-based storage servers, etc. The temperature control unit 2 may further be provided with a processing unit 12, which is configured based on the temperature detected from the first temperature sensor 14 and/or the second sensor 17 to operate a voltage regulating unit 13. The voltage regulating unit 13 may be responsible for generating from at least one voltage source 3, e.g. electricity mains voltage or battery pack, a supply voltage signal may be transmitted via the input interface module 20, which may be connected to the first connector 6 of the conduit heating unit 1 using a cable 7 and the connector 11, to the heating unit 1b of the conduit heating unit 1. The processor unit 12 may be arranged for controlling the operation of the voltage regulating unit 13 using a set of programmable instructions, so as to adjust the operation of the conduit heating unit 1. The programmable instruction may be stored in the memory of the processor unit 11 and executed by a computer software program. For example, the processor unit 12 may control based on the information received from the first and/or second temperature sensor 14 and 17 the electrical characteristics of the supply voltage signal, e.g. frequency, amplitude, etc. according to the temperature detected. For example, the processing unit 12, based on a set of instruction loaded into the memory, may be arranged as soon as the temperature detected by the first sensor 14 and/or second sensor 17 falls below a temperature threshold point, e.g. +3 degrees Celsius, to activate the voltage regulating unit 13. The voltage regulating unit 13 based on instructions received by the processor may generate a supply voltage signal having predetermined electrical characteristics that would cause the at least one resistive element 10 to generate a predetermined amount of heat that would maintain the fluid in the pipe 4 at a target temperature, e.g. +3 degrees Celsius. The processing unit 12 may be arranged to continuously monitor the conduit temperature and/or the ambient temperature and accordingly adapt the electrical characteristics of the supply voltage signal to ensure that the fluid is maintained at the desired temperature irrespective of the rate at which the temperature measured drops below the predetermined threshold. The temperature control unit 2 may communicate via the communication network interface 15 with a software application running on a user-operated mobile device, e.g. mobile, laptop, tablet, etc. The user, via the software application, may remotely monitor and control the operation of the heating system 100. For example, the user may be arranged to react to information received from the temperature control unit 2, e.g. adjusting the target fluid temperature of the fluid and/or threshold temperature. Furthermore, the user, by means of the mobile application, may activate or deactivate the temperature control unit 2, update the firmware and instructions of the processing unit 12, or performed any other desired function. The temperature control unit 2 may be connected via a voltage supply switching mechanism 18 to a backup voltage source 19. The voltage supply switching mechanism 18 may be configured when there is an interruption of service in the primary voltage source 3 to switch to the backup voltage source, so that the heating system 100 can continue to operate even when there is an interruption of service in the primary voltage source 3, e.g. an electricity power-cut. The voltage supply switching mechanism 18 may be implemented in a desired electrical configuration known to the skilled person, e.g. using diodes in diode-OR configuration. The voltage supply switching mechanism 18 may contain Integrated Circuits (ICs) configured to switch between the different connected power sources in the case of an interruption, in an efficient manner that minimises the switching noise. The temperature control unit 2 may be provided with a system bus 16 arranged for facilitating the exchange of digital and/analogue signals between the different modules of the heating system 100. The primary voltage source 3 and backup voltage source 19 may be of predetermined voltage, e.g. +12V, used for generating the supply voltage signal and operate the different modules of the heating system.

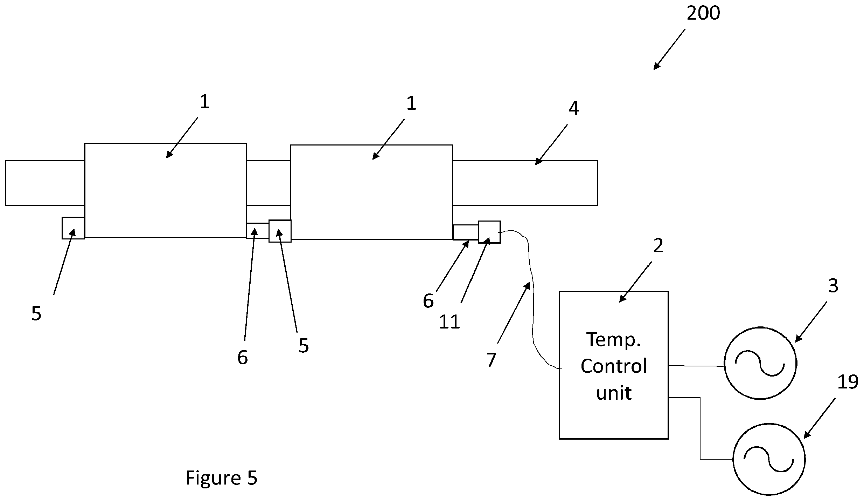

Figure 5 shows an example of a modular heating system 200 according to the present invention. The modular heating system 200 may comprise at least two conduit heating units 1 according to the embodiments of the present invention. The conduit heating units 1 may be connected to one another via the first and second connectors 5 and 6. As shown in Figure 5, the second electrical connector 5 of the first conduit heating unit 1 may be connected to the first electrical connector 6 of the second conduit heating unit 1. The modular heating system 200 may be operated by at least one temperature control unit 2 according to embodiments of the present invention. The temperature control unit 2 may be configured to operate the conduit heating units 1 of the modular heating system either as one device or independently in the manner previously described. According to embodiments of the present invention, each of the conduit heating units 1 of the modular heating system 200 may be connected to a separate temperature control unit 2, operating according to embodiments of the present invention.

### Test environment

A test environment was created to validate the operation of the heating system 100 according to embodiments of the present invention. The purpose of the test environment was to assess the viability of using electric heating elements to maintain conduit sections, such as the sections of domestic water pipes, above a freezing point, e.g. 0°C. The heating elements of the test environment operated from 12 Volts power supply, and future developments of this concept may use battery backup power for short mains interruptions. A digital temperature sensor monitors the pipe temperature. The data collected is fed to a microcontroller. The test environment allowed for one microcontroller to be connected to two different pipe samples A and B.

In the framework of the test environment a software program was designed to switch on power to the heating element on Sample A for 10 seconds if the temperature of the pipe drops below the set threshold (nominally 3°C). This procedure is then repeated with Sample B. The temperature of Sample A is measured at this point, i.e. 10 seconds after the power to Sample A was removed to allow for heat distribution. The whole cycle then loops around this process. The microcontroller sent all relevant data to the PC on each 10s cycle.

A freezer was used to simulate a temperature controlled environment. At each side of the freezer, holes were drilled to feed water pipes connected to the mains water supply and can be filled with water and air bled out.

In the test environment, the heating elements consisted of polyurethane sheets with embedded tungsten wires. These sheets were dimensioned so that they wrapped once around a 320mm length of ½" pipe. The pipe used may be made from a range of material e.g. copper and/or plastic such as the Qual-Pex plumping and heating pipes. The wires run along the length of the heating element and are bonded to foil buss-bars at each end. These buss-bars are then connected by wire to standard spade connectors as used in automobile electrics. The combined parallel resistance of the tungsten wires was measured at 12 Ohms ±0.5 Ohm (depending on the sample). The elememts were operated using a 12 Volt supply producing 12 Watts power.

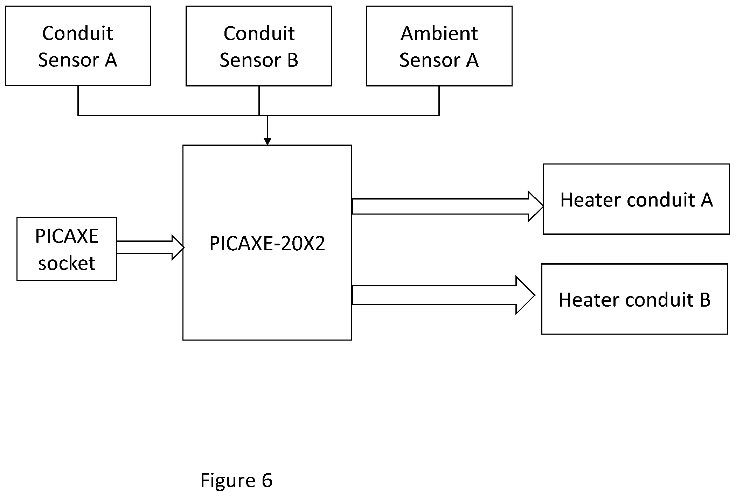

Figure 6 shows a circuit diagram of the microcontroller board built to control the operation of the heating elements in the test environment. The circuit is built around the PICAXE 20X2 microcontroller. This device is particularly suited to the rapid prototyping of both hardware and software systems. The DS18B20 may be used as a digital temperature sensor for the conduit sensor A, B, and ambient sensor. This device has a range of -55°C to 125°C. The temperatures are recorded to the nearest whole number. Transistors, e.g. N-Channel MOSFETs rated at 9.2 Amps, may be used as solid-state switches for delivering power to the heating elements of heater conduit A and B. The system can be re-programmed via the PICAXE socket. The heaters A and B are associated with pipe samples A and B, as previously discussed.

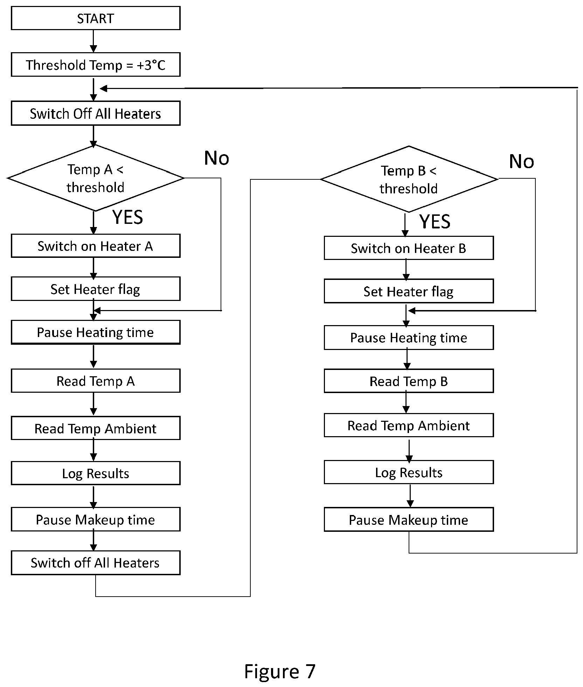

Figure 7 shows an example of the flowchart of the software algorithm loaded into the PICAXE microcontroller to control the operation of the heaters A and B shown in the circuit diagram of figure 6. The test environment was set up to control two different pipe samples independently, heater conduit A and B. Each sample was heated in a 10 second time slice, as shown in Figure 7. The time slicing approach has the advantage that a single heater power supply rated at 12 watts could supply two heaters each of which is rated at 12 watts.

Figure 8 shows the results of the test environment operated under the following conditions: - Freezer set at Medium (elapsed hours on X-axis).
- Controller temperature threshold = 3°C
- Length of run = 17:55 hours

In the chart, the X-axis represents the temperature in Celsius while the Y-axis represents the test duration (in hours) in which the test environment was operated under the above conditions. The temperature of a copper pipe (see above for dimensions) is indicated with the reference numeral 30, while the ambient temperature of the freezer space is indicated with the reference numeral 31. As shown, the controller performed well as expected, switching on the pipe heater whenever the temperature dropped below the set threshold of 3°C. As can be seen, the pipe temperature was maintained at 2°C. After 11 hours the freezer reached the working temperature corresponding to a medium setting. The ambient temperature measured inside the freezer space was cycled between -18°C and -14°C. During this cycling period, the pipe temperature overshot to 4°C 16 times during a 6 hour period. The ambient temperature spike observed at about 1 hour was due to the freezer door being momentarily opened. The pipe temperature starts at 20°C because the pipe was filled with room-temperature water prior to the run. Because the pipe temperature is constantly cycling between 2°C and 3°C at 30-60 second intervals some charts will show a thick red line because the scale of the chart is so large relative to the cycle times of the pipe temperature. As shown in the chart, the heating system of the test environment, which was built according to some embodiments of the present invention, maintained the temperature of the pipe above freezing.

The higher the threshold temperature, the more power will be consumed. The following table shows the performance figures at different threshold temperatures, averaged over a three hour period with the freezer cycling -11°C to -16°C. The ΔPower figures are with respect to the power at a nominal threshold of 3°C.

| | **Copper** | | | **Qual-Pex** | | |
|---|---|---|---|---|---|---|
| Threshold Temp | Average Power (W) | Δ Power (W) | Δ Power % | Average Power (W) | Δ Power (W) | Δ Power % |
| 2°C | 2.19 | -0.1 | -4.4% | 1.58 | -0.02 | -1.3% |
| Nominal 3°C | 2.29 | 0 | 0 | 1.60 | 0 | 0 |
| 4°C | 2.54 | 0.25 | 10.9% | 1.75 | 0.15 | 9.4% |
| 5°C | 2.72 | 0.43 | 18.8% | 1.86 | 0.26 | 16.3% |

## Claims

1. A heating system (100) for maintaining a fluid in a conduit (4) around a target temperature, the heating system (100) comprising:
at least one conduit heating unit (1) comprising
a sleeve member (1a) arranged to be releasably secured around an outer wall (4a) of a section of the conduit (4); and
a heating unit (1b) comprising at least one resistive heating element (10) having a fixed electrical resistance, and a first electrical connector (6) connected to the at least one resitive element (6) and arranged for transfering to the at least one resistive heating element (10) a supply voltage signal having predetermined electrical characteristics, the heating unit (1b) being releasably attached at an inner surface of the sleeve member (1a) such that, when the sleeve member (1a) is secured around the section of the conduit (4), the heating unit (1b) being in contact with a first portion of the outer wall (4a) of the conduit (4) so that when the supply voltage signal is applied to the at least one resitive heating element (10), the heat generated is transferred via the first portion of the outer conduit wall (4a) to the fluid in the conduit (4);
**characterised in that** the heating system (100) comprises
at least a first sensor (14) arranged for at least measuring the conduit temperature, the first sensor (14) being in contact with a second portion of the outer wall (4a) of the conduit (4), and
a temperature control unit (2) coupled to the conduit heating unit (1) via the first connector, the temperature control unit (2) comprising a processing unit (12) operatively coupled to the at least first sensor (14) for continously monitoring the conduit temperature, the processor being programmed when the conduit temperature drops below a first thereshold level to operate a voltage regulating unit (13), the voltage regulating unit (13) being arranged, based on instructions received from the processing unit (12), for generating from a voltage source the supply voltage signal to be applied to the at least one resistive heating element (10) of the heating unit (1b) for heating the fluid in the conduit (4) to the target temperature.

2. The heating system (100) according to claim 1, wherein the processing unit (12) is arranged, based on at least the conduit temperature detected, for adjusting the duty cycle of the voltage regulating unit (13) and/or the amplitude of the supply voltage signal so as to adapt the heat generated by the at least one resistive heating element (10).

3. The heating system (100) of any one of the preceding claims, wherein the set of instructions loaded in the memory of the processing unit are in the form of at least one user programmable Look-Up Table (LUT).

4. The heating system (100) of any one preceding claims, wherein the temperature control unit (2) is arranged for exchanging data, via a communication network, with a user device, which enables the user to remotely monitor and/or adjust the operation of the heating system (100) according to the received data.

5. The heating system (100) of claim 4, wherein the temperature control unit (2) is arranged, when the conduit temperature detected by the first sensor (14) is raised above a second threshold level, for issuing an alert signal to the user device, the second threshold level being higher than the first threshold level.

6. The heating system (100) of any one of the preceding claims, wherein the sleeve member (1a) is in the form of a tube having a longitudinal opening running the entire length of the sleeve member (1a), the dimensions of the opening being adjustable so as to allow the sleeve member (1a) to fit around the conduit (4).

7. The heating system (100) of claim 6, wherein the sleeve member (1a) is made from a resilient material, which is arranged , when a force is applied, for adjusting the dimensions of the opening of the sleeve member (1a), the sleeve member (1a) being biased towards the original tube shape.

8. The heating system (100) of any one of the preceding claims, wherein the sleeve member (1a) is made from an insulating material.

9. The heating system (100) of any one of the preceding claims, wherein the at least part of the at least one resistive heating element (10) is embedded in a membrane sheet, which membrane sheet is releasably attached to the inner surface of the sleeve member (1a) by means of an adhesive.

10. The heating system (100) of any one of the preceding claims, wherein at least part of the first sensor (14) is embedded in a membrane sheet, wherein the first sensor (14) is connected to the first electrical connector (6).

11. The heating system (100) of claim 10, wherein the membrane sheet is made from polyurethane.

12. The heating system (100) of any one of the preceding claims, wherein the at least one resistive heating element (10) is made from a metal-based material.

13. The heating system (100) of any one of the preceding claims, wherein the at least one resistive heating element (10) is made from tungsten.

14. The heating system (100) of any one of the preceding claims, wherein the temperature control unit (2) is connected via a voltage supply switching mechanism to a backup voltage source, the voltage supply switching mechanism being configured, when a voltage interruption is detected in the primary voltage source, for switching to the backup voltage source so as to ensure continuation of service.

15. The heating system (100) of any one of the preceding claims, wherein the at least one conduit heating unit (1) comprises a second electrical connector (5), which is operatively coupled to the first electrical connector (6), the second electrical connector (5) being configured to connect to the first electrical connector (6) of a second conduit heating unit (1) that is releasably secured on the conduit (4) such that multiple conduit heating units (1) can be controlled by a single temperature control unit (2).
